# EUROPEAN PATENT APPLICATION

(11) **EP 2 031 559 A1**
(43) Date of publication of application: **04.03.2009**
(21) Application number: 07016944.6
(22) Date of filing: 29.08.2007
(51) Int. Cl.: G06T 7/00

(54) **Augmented visualization in two-dimensional images**

(71) Applicant: ETH Zürich, 8092 Zürich (CH)
(72) Inventor: Wengert, Christian, 8002 Zürich (CH); Bossard, Lukas, 6048 Horw (CH); Häberling, Armin, 8913 Ottenbach (CH); Baur, Charles, 2024 St-Aubin NE (CH); Cattin, Philippe, 8125 Zollikerberg (CH); Szekely, Gabor, 8032 Zürich (CH)
(74) Representative: Samson & Partner

(57) **Abstract**

The present invention relates to determination of spatial cue information for an object in a spatial environment on the basis of two-dimensional image information of the object for augmented two-dimensional visualization of the object.

## Description

### Field of the Invention

The present invention generally relates to two-dimensional imaging for visual control of manipulation in three-dimensional environments and, particularly, means and measures for enhancing such two-dimensional imaging by augmented visualization.

### Background of the Invention

In several fields, manipulation, tasks, operations and the like (in the following collectively referred to as manipulation) actually performed in a three-dimensional environment are visually controlled on the basis of two-dimensional image information. Examples for such cases include manipulation in confined areas like internal cavities of structures, devices etc. (e.g. internal cavities in engines, of structures including external walls like car doors) and intra-corporal sites in human and animal bodies.

For illustrative purposes only, without intention of limitation, it will be referred to - as exemplary applications - endoscopic interventions in the field of e.g. human and veterinary medicine, such as endoscopic surgery, minimal invasive surgery (MIS), endoscopic ophthalmology, endoscopic neurology, endoscopic vascular surgery, minimal invasive treatment of and/or at a brain, esophagogastroduodenoscopy, colonoscopy, proctosigmoidoscopy, rhinoscopy, bronchoscopy, cystoscopy, colposcopy, hysteroscopy, falloscopy, laparoscopy, thoracoscopy, mediastinoscopy, amnioscopy, fetoscopy and arthroscopy, as well as borescopy procedures in the field of e.g. industrial inspection of internal cavities, hollow spaces in, for example, vehicle doors, fluid containers, vehicle wings/fenders and further including applications in architecture and applications by police forces and comparable authorities.

Commonly, in endoscopic interventions, an intra-corporal site is observed via a display screen on which two-dimensional images of the intra-corporal site provided by endoscopic imaging (e.g. by means of a camera attached to oculars of endoscopic optics, or an intra-corporally located camera) are displayed. However, endoscopic interventions require precise positioning and manipulation of, e.g., endoscopic instruments, implants, suture material, in three dimensions, while the visual information thereon is merely two-dimensional. Therefore, a person carrying out intra-corporally manipulation must substitute missing visual spatial information by experience, intra-corporal movements, palpation and the like. This may result in a prolonged duration of an endoscopic intervention, sub-optimal interventional results, intra-corporal injuries, bleeding etc. Comparable problems may also arise in borescopy applications.

### Object of the Invention

It is an object of the present invention to provide solutions improving two-dimensional imaging for visual control of manipulation in three-dimensional environments in order to at least provide spatial information in displayed images missing in known approaches and to at least reduce the burden of a person carrying out such manipulations to compensate missing spatial information.

### Short description of the Invention

According to an aspect, the present invention provides a method of determining spatial cue information for an object in a spatial environment on the basis of two-dimensional image information of the object for augmented two-dimensional visualization of the object, including the steps of providing two-dimensional environment image information indicating a two-dimensional representation of the spatial environment, the two-dimensional environment image information including two-dimensional object image information indicating a two-dimensional representation of the object; extracting the two-dimensional object image information from the two-dimensional environment image information; comparing the extracted two-dimensional object image information and object shape information indicating a shape of the object; determining, on the basis of a result of the comparison step, object position information indicating a spatial positioning of the object in the spatial environment; and determining spatial cue information on the basis of object position information.

According to another aspect, the present invention provides a computer program product including program code for, when being executed on a computer system, carrying out the steps of providing two-dimensional environment image information indicating a two-dimensional representation of the spatial environment, the two-dimensional environment image information including two-dimensional object image information indicating a two-dimensional representation of the object; extracting the two-dimensional object image information from the two-dimensional environment image information; comparing the extracted two-dimensional object image information and object shape information indicating a shape of the object; determining, on the basis of a result of the comparison step, object position information indicating a spatial positioning of the object in the spatial environment; and determining spatial cue information on the basis of object position information.

According to a further aspect, the present invention provides a visualization enhancement device for augmented two-dimensional visualization of an object in a spatial environment by means of spatial cue information, which device comprises a unit being adapted to provide two-dimensional environment image information indicating a two-dimensional representation of the spatial environment, the two-dimensional environment image information including two-dimensional object image information indicating a two-dimensional representation of the object; a unit being adapted to extract the two-dimensional object image information from the two-dimensional environment image information; a unit being adapted to compare the extracted two-dimensional object image information and object shape information indicating a shape of the object; a unit being adapted to determine, on the basis of a result of the comparison step, object position information indicating a spatial positioning of the object in the spatial environment; and a unit being adapted to determine spatial cue information on the basis of object position information.

According to a still further aspect, the present invention provides a system, which comprises a device having a unit being adapted to provide two-dimensional environment image information indicating a two-dimensional representation of the spatial environment, the two-dimensional environment image information including two-dimensional object image information indicating a two-dimensional representation of the object; a unit being adapted to extract the two-dimensional object image information from the two-dimensional environment image information; a unit being adapted to compare the extracted two-dimensional object image information and object shape information indicating a shape of the object; a unit being adapted to determine, on the basis of a result of the comparison step, object position information indicating a spatial positioning of the object in the spatial environment; and a unit being adapted to determine spatial cue information on the basis of object position information; and further comprising the object.

### Short description of the Drawings

Embodiments of the invention will now be described, by way of example, and with reference to the accompanying drawings, in which:
- Fig. 1: illustrates a possible scenario for an application of the present invention;
- Fig. 2: illustrates a possible manipulation task for application of the present invention;
- Fig. 3: illustrates an embodiment of the present invention;
- Fig. 4: illustrates an example of spatial cue information for the embodiment of Fig. 3;
- Fig. 5: illustrates a further embodiment of the present invention;
- Fig. 6: illustrates a further embodiment of the present invention;
- Fig. 7: illustrates a further embodiment of the present invention;
- Fig. 8: illustrates operational states of embodiments of the present invention;
- Fig. 9: illustrates processes and procedures of embodiments of the present invention;
- Fig. 10: illustrates diagrams used for explaining embodiments of the present invention;
- Fig. 11: illustrates an example of augmented visualization according to the present invention; and
- Fig. 12 and 13: illustrates principles of embodiments of the present invention using additional data such as intra-operatively reconstructed three-dimensional models (Fig. 12 schema of virtual interaction; Fig. 13: the solid part of the cutting line remains after the visibility tests; lines on the backside of the model and non-visible lines are discarded.)

### Description of preferred embodiments

Before proceeding further with the detailed description of the figures, a few items of preferred embodiments will be discussed.

In the method of the present invention, the step of providing two-dimensional environment image information may include a step of providing at least one two-dimensional environment image information; and wherein at least one of the extracting step, the comparing step, the object position information determining step and the spatial cue information determining step is performed for each of the at least one two-dimensional environment image information.

In some cases, it is preferred to use at least two two-dimensional environment image information rather than at least one two-dimensional environment image information. Such embodiments may be employed if an object of interest has symmetrical properties (e.g. rotational symmetries) possibly resulting in ambiguities concerning object position information. Such ambiguities may reside in first object position information obtained from two-dimensional objecting information indicating a first position of the object in space and second object position information obtained from the same two-dimensional object information indicating a second position of the object in space being different from the first position of the object in space. Such problems may be eliminated by obtaining object position information on the basis of two, three, four, ... two-dimensional environment or object, respectively, image information. Then, different object position information may be used to ascertain a correct position of the object in space, for example, by comparing object position information based on different two-dimensional environment (and/or object) image information.

In the method of the present invention, the extracting step may include a step of segmenting the at least one two-dimensional environment image information to obtain, at least as part of the two-dimensional object image information, object related image information and/or environment related image information. Further, the step of segmenting may include a step of color segmenting to obtain object related color information and/or environment related color information.

In the method of the present invention, the extracting step may include a step of labeling parts of the two-dimensional environment image information, which parts are determined or at least considered to belong to the two-dimensional object image information, as parts of the two-dimensional object image information. Further, the step may include a step of labeling non-connected parts of the two-dimensional environment image information, which have been labeled as part of the two-dimensional object image information, with the same label.

In the method of the present invention, the extracting step may include a step of discarding one or more portions of the two-dimensional environment image information for the extracting step if the one or more portions exceed a given criterion. For example, the criterion may include a minimally required area size and/or any other image moment.

In the method of the present invention, the discarding step may be particularly carried out for a part of the two-dimensional environment image information representing an image area smaller than a given area size; here, the given criterion would be the minimally required area size.

In the method of the present invention, the comparing step may include a step of fitting the object shape information to the extracted two-dimensional object image information. Here, the fitting step may include a step of transforming the object shape information to obtain a transformed object shape information at least parts of which matching the two-dimensional object image information. Further, the transforming step may be carried out with reference to a reference coordinate system.

Moreover, the object shape information may be two-dimensional or three-dimensional object shape information and the fitting step may be carried out by fitting the two-dimensional or three-dimensional object shape information to the extracted two-dimensional object image information for obtaining fitted two-dimensional or three-dimensional object shape information.

In such embodiment, the fitting step may include a step of determining at least one fitted three-dimensional object shape information each thereof representing the fitted two-dimensional object shape information in a three-dimensional coordinate system.

In the case of at least two fitted three-dimensional object shape information are determined, the step of determining fitted three-dimensional object shape information may include a step of determining determined two-dimensional object shape information for each of the at least two fitted three-dimensional object shape information and a step of comparing the at least two determined two-dimensional object shape information with the original two-dimensional object shape information.

The step of comparing the at least two determined two-dimensional object shape information may include a step of determining a deviation between each of the at least two determined two-dimensional object shape information and the original two-dimensional object shape information and selecting the determined two-dimensional object shape information, which exhibits a smaller deviation as compared with the at least one remaining determined two-dimensional object shape information, for further use as the fitted three-dimensional object shape information.

In the method of the present invention, the step of determining object position information may include a step of determining at least one of translational information and/or rotational information for the object in the spatial environment.

In case the above fitting step is provided, the step of determining object position information may include a step of determining the position of the object based on data used in the fitting step.

In the case the above transforming step is provided, the step of determining object position information may include a step of determining the position of the object based on a transformation used for the transforming step.

Further, the step of determining object position information may include a step of determining the position of the object based on the fitted three-dimensional object shape information.

In the method of the present invention, the step of determining objection position information may be carried out with reference to a coordinate system.

In the method of the present invention, the step of determining spatial cue information may include a step of determining a two-dimensional or three-dimensional geometry comprising at least a part of the object having at least a part of said shape.

In such embodiments, the step of determining a two-dimensional or three-dimensional geometry may include a step of determining two-dimensional information representing said geometry in a two-dimensional coordinate system.

In the method of the present invention, the step of determining spatial cue information may be carried out with reference to a reference coordinate system.

Further, the method may include a step of generating, on the basis of the two-dimensional information representing said geometry, the spatial cue information.

The method may further include a step of amending the at least one two-dimensional environment image information and/or at least one of further two-dimensional environment image information by the spatial cue information. Such embodiments may include a step of displaying the amended two-dimensional environment image information.

In the method of the present invention, the step of providing two-dimensional environment image information may include a step of two-dimensional image acquisition of the environment and the object. The step of two-dimensional image acquisition may include using a camera device for minimal invasive surgery, medical endoscopy and/or borescopy

The method may further comprise a step of providing at least a part of the object with a visible characteristic being distinguishable from visible characteristics of the environment, such as at least of color-coding (including, e.g., object specific color(s), gray level(s), and the like), an object specific shape (e.g. a shape usually not existing in the environment), an optical surface property (e.g. reflection, absorption and the like), ... of at least a part of the object. Such a visual characteristic may be used to identify the object and its object image information within the environment and its image information, respectively.

In addition or as alternative to visual characteristic(s) being distinguishable from the environment, it is possible to use techniques for obtaining one or more structured characteristics of the object. Examples for one or more structural characteristics include points, point sets, edge(s), curved portion(s), geometrical shape(s) (e.g. circles, lines ellipses), recess(es), extension(s), protrusion(s), textures and the like.

In more general, universal embodiments identification of the object may be performed iteratively by, for example, mapping (e.g. projecting) a known structural characteristic (e.g. shape of (a portion of) the object) and corresponding data, respectively, into an image of the environment including the object and minimizing differences between the known structural characteristic (data) and the object (or its image data) or a respective part thereof, Here, for example edges may be used as structural characteristic.

The object may be a tool tip, a manipulating portion of an instrument, a manipulator, a surgical needle, a surgical implant, one or more screws and/or plates and the like.

The method may further include a step of providing previously registered image information of the environment without the object, the previously registered image information including visual information indicating at least one target position to which the object is to be at least one of being moved to, at which the object is to be positioned, and at which a manipulation by means of the object is intended; a step of mapping the at least two-dimensional environment image information and the previously registered image information to determine, for each of the at least one target position, a corresponding position within the at least two-dimensional environment image information; and a step of amending the at least one two-dimensional environment image information and/or further two-dimensional environment image information by position indicating information at the at least one determined corresponding position.

The method may employ, as a reference coordinate system, a coordinate system of an image acquisition device for acquiring the two-dimensional environment image information.

The method may, in addition or as alternative, employ, as a reference coordinate system, a coordinate system of a three-dimensional tracking device.

In the method, at least one of the above-described steps may be, as far as applicable, carried out for at least two two-dimensional environment image information further including a step of comparing an outcome of the at least one step in relation to a two-dimensional environment image information and an outcome of the at least one step in relation to a further two-dimensional environment image information and a step of discarding the outcome in relation to the further two-dimensional environment image information if a result of the comparing step indicates exceeding a threshold.

In the device of the present invention, the extracting unit may be adapted to segment the at least one two-dimensional environment image information to obtain object related image information and/or environment related image information.

The comparing unit may be adapted to fit the object shape information to the extracted two-dimensional object image information.

The unit for determining object position information may be adapted to determine a position of the object in the spatial environment.

The unit for determining spatial cue information may be adapted to determine a two-dimensional or three-dimensional geometry comprising at least a part of the object having at least a part of said shape.

The device may further include a unit being adapted to amend the at least one two-dimensional environment image information and/or at least one of further two-dimensional environment image information by the spatial cue information.

The device may also include a unit being adapted to display the amended two-dimensional environment image information.

The above-discussed unit may be provided as separate unit (e.g. including suitable image and/or data processing components and/or (micro) processor/computer) or may be, at least with respect to some units, provided as integrally formed arrangement (e.g. computer-based system or personal computer). Also, at least some of the units may be considered as functional units of a larger system, such as a computer-based image and/or data processing system.

The unit for providing two-dimensional environment image information may include a two-dimensional image acquisition unit being adapted to obtain two-dimensional image information of the environment and the object.

Examples of said units include, e.g., endoscope camera devices, (digital) cameras for still images/pictures, video cameras, image scanners and the like.

The device may further include a unit being adapted to provide previously registered image information of the environment without the object, the previously registered image information including visual information indicating at least one target position to which the object is to be moved and/or at which the object is to be positioned; and a mapping unit being adapted to map the at least two-dimensional environment image information and the previously registered image information to determine, for each of the at least one target position, a corresponding position within the at least two-dimensional environment image information.

Examples of previously registered image information may be based on, e.g., CT images, MRI images, X-ray images, ultra sound images and technologies and/or methods described in "Markerless Endoscopic Registration and Referencing" by Ch. Wengert et al. in Medical Image Computing and Computer-Assisted Intervention, 2006, pages 816 - 823, Springer.

The above-mentioned amending unit may be adapted to amend the at least one two-dimensional environment image information and/or further two-dimensional environment image information by position indicating information at the at least one determined corresponding position.

In the system of the present invention, the object may be a tool tip, a manipulating portion of an instrument, a manipulator, a surgical needle, a surgical implant, a medical or technical screw, a plate, a cube, a pin, a guide tube for screws, a peg, a mechanical/optical/electrical/electronic element, etc.

The system may further include a three-dimensional tracking device being adapted to provide a spatial coordinate system for the object. The system may further include a three-dimensional tracking device being adapted to provide a spatial coordinate system for the object and/or the camera.

For illustrative purposes only, without intention of limitation, it will be referred to - as exemplary applications - endoscopic interventions in the field of e.g. human and veterinary medicine, such as endoscopic surgery, minimal invasive surgery (MIS), endoscopic ophthalmology, endoscopic neurology, endoscopic vascular surgery, minimal invasive treatment of and/or at a brain, esophagogastroduodenoscopy, colonoscopy, proctosigmoidoscopy, rhinoscopy, bronchoscopy, cystoscopy, colposcopy, hysteroscopy, falloscopy, laparoscopy, thoracoscopy, mediastinoscopy, amnioscopy, fetoscopy and arthroscopy, as well as borescopy procedures in the field of e.g. industrial inspection of internal cavities, hollow spaces in, for example, vehicle doors, fluid containers, vehicle wings/fenders and further including applications in architecture and applications by police forces and comparable authorities.

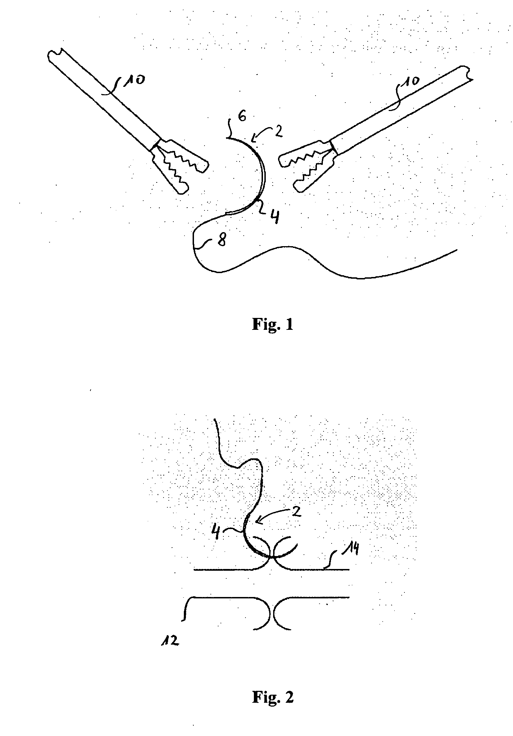

Figs. 1 to 7 illustrate embodiments of the present invention as well as their operations, all of which may be considered a simplified presentation given in order to promote a general understanding of the present invention.

Figs. 1 to 7 refer to an exemplary endoscopic intra-corporal procedure to be performed in a spatial environment in form of intra-corporal cavity where a needle is used for, e.g., suturing a blood vessel. Here, the needle is an object the two-dimensional visual representation (e.g. video image(s) on a display screen) of which in the environment (intra-corporal cavity) is to be (visually) augmented by depth cues.

In other medical applications and/or procedures and interventions, respectively, an object of interest may include a screw, a plate, a pin, a peg, a (guide) wire, an implant, (a portion of) an instrument or tool, etc. In technical applications, an object of interest may include a screw, a nut, a bolt, a peg, a pin, a spring, an electrical/electronic/optical/mechanical component, element or member, (a portion of) a tool, etc.

As shown in Fig. 1, a needle 2 includes a curved portion 4 having a needle tip 6 at one end and being coupled with a thread or suturing wire 8 at its other end. The curved portion 4 is assumed to have a nearly half circular shape with a known geometry (e.g. a radius of about 8.5 mm, a diameter of about 1 mm). In other embodiments, for example, a third of circular shape may be employed and/or different radial dimensions may be employed.

The shape of the needle 4 and, particularly, its curved portion 4 is a shape on the basis of which needle positions in the environment may be determined. Information on this shape (e.g. radius and/or diameter) represents an example of object shape information.

For manipulation, positioning and the like of the needle 2, one ore more endoscopic forceps or pliers 10 (see Fig. 1) may be used. The needle 2 may be, e.g., used for a suturing process illustrated in Fig. 2 where two blood vessel parts 12 and 14 are to be sutured together (again).

It is noted that the present invention contemplates to use - in any of its applications - standard equipment; in the examples of Figs. 1 to 7, standard needle 2 and endoscopic pliers 10 are assumed. In particular, the present invention does not require special image acquisition tools but may used standard video imaging devices providing two-dimensional still and/or moving pictures, such as CCD-based cameras and/or CMOS-based cameras, ultrasound-based camera systems, MRI-based systems, infrared-based systems and the like. It is even contemplated to use conventional photo cameras and video cameras.

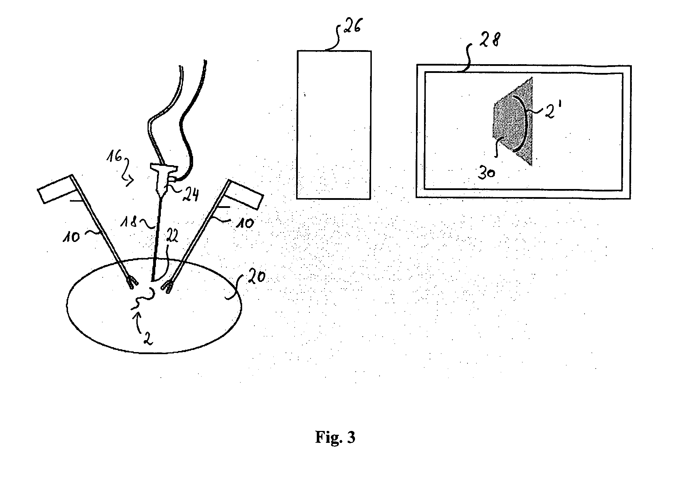

Fig. 3 schematically illustrates an arrangement for the above-assumed suturing application, including endoscopic pliers 10 and, as image acquisition unit, a conventional endoscopic camera device 16. The endoscopic camera device 16 comprises a shaft 18 including incorporated therein an optical system (not shown) through which an intra-corporal manipulation environment 20 may be observed. Intra-corporal manipulation environment 20 is an example of "spatial environment". It is noted that tissue confining the intra-corporal manipulation environment 20 and covering the intra-corporal manipulation environment 20 from being directly observed visually is not shown.

The shaft's optical system may include one or more lenses, prisms, mirrors etc. for propagating light from the shaft's distal end 22 to, e.g., a CCD/CMOS camera at the shaft's proximal end 24. The endoscopic camera device 16 may alternatively include a, e.g., CCD/CMOS camera device directly arranged at the shaft's distal end 22; then an optical system in the shaft 18 may be not necessary.

Image information acquired by the endoscopic camera device 16 includes - as two-dimensional environment image information - two-dimensional information on the intra-corporal manipulation environment 20 in which the object "needle 2" will be manipulated, positioned etc. Thus, image information of the endoscopic camera device 16 also includes - as two-dimensional object information - two-dimensional image information on the needle 2.

Image information from the endoscopic camera device 16 is transmitted, e.g. via a cable as shown in Fig. 3 or wireless, to a computation unit 26. Computation unit 26 may be, e.g., a conventional personal computer system or an application specific computing device or system. Computation unit 20 is adapted to compute image information of the endoscopic camera device 16 to determine - as object position information - information indicating a current position, movement, rotation, acceleration etc. of the needle 2 when being manipulated in the intra-corporal manipulation environment 20. This applies to image information of the endoscopic camera device 16 representing a single image ("photo", "snapshot") and image information of the endoscopic camera device 16 representing a sequence of images ("video", "moving pictures"). Further details concerning determination of position(s) of the needle 2 and particularly pose(s) (such a translation and/or rotational positions and movements) thereof are given below. Computation unit 26 may be therefore considered to include the invention system's unit for extracting two-dimensional object information, for comparison, for determining object position information and for determining spatial cue information.

Upon determination of a current position of the needle 2, the computation unit 26 may determine - as spatial cue information - one or more artificial depth cues in two-dimensional or socalled 2.5-dimensional form and may display such artificial depth cue(s) together with image information of the endoscopic camera device 16 on a display unit 28 (e.g. including a LCD or TFT monitor, etc.). Two-dimensional depth cues are represented by two-dimensional image information. 2.5-dimensional depth cues are also represented by two-dimensional image information but having three-dimensional (spatial) information rendered on-top.

Examples of information that may be rendered on-top include, for example, information indicating distances (e.g. by line(s) and/or plane(s) and/or arrow(s) and/or color coding and/or coordinate system(s)), information supporting orientation (e.g. semi- transparent plane(s) and/or color-coding and/or coordinate system(s) and/or line(s) and/or arrow(s)), etc.

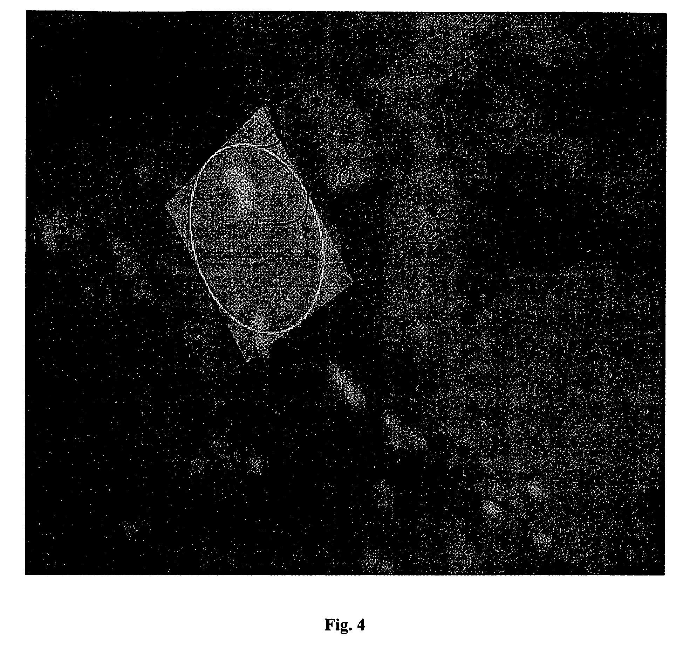

An example of spatial cue information is illustrated in Figs. 3 and 4 as visual reference structure in form of a plane 30, e.g., semi-transparent overlaid over displayed two-dimensional environment image information 20' of the intra-corporal manipulation environment's and particularly overlaid over displayed two-dimensional image information 2' of the needle.

In further embodiments, additional information on the intra-corporal manipulation environment 20 and particularly a target portion, in or at which - according to the above assumption - suturing is to be carried out may be used to enhance, augment visualization.

Such information may include, e.g., information obtained before and/or during the intervention by means of, for example, ultrasound imaging, MRI, X-ray imaging, CT imaging and the like. Such information may include two-dimensional and/or three-dimensional image information, which in preferred embodiments may be used to generate additional (two-dimensional) visual information on the display unit 28. For example, additional information may be in form of pre-operatively obtained image(s) of the intra-corporal manipulation environment (or parts thereof) and, particularly, an area, location thereof in/at which manipulation should be carried out. Such areas, locations, sites, etc. may be referred to as target position(s).

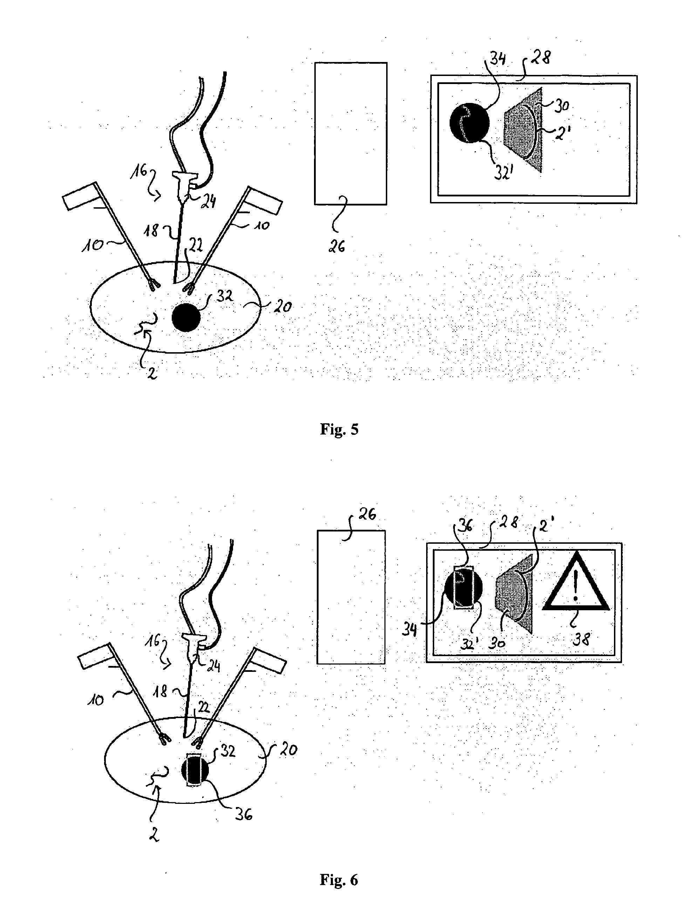

In Fig. 5 such an area is generally indicated at 32 as site in the intra-corporal manipulation environment 20.

In the following, it is assumed that pre-operatively acquired CT and/or MRI image data of the target site 32 and/or intra-operatively reconstructed (two-dimensional or three-dimensional) information of the target site 32 is available. It might be helpful to have also pre-operatively obtained image information on parts of the intra-corporal manipulation environment 20 surrounding the target site 32; such information might facilitate mapping of pre-operatively obtained image information on the target site 32 and corresponding image information obtained by endoscopic camera device 16.

Techniques of mapping pre-operatively obtained image information on the target site 32 and corresponding image information obtained by endoscopic camera device 16 are described in, for example, "Markerless Endoscopic Registration and Referencing" by Ch. Wengert et al. in Medical Image Computing and Computer-Assisted Intervention, 2006, pages 816 - 823, Springer.

As shown in Fig. 5, the pre-operatively obtained image information on the target site 32 (or at least parts thereof) may be displayed - together with image information described with reference to Fig. 3 - on the display unit 28; this is indicated by reference numeral 32' in Fig. 5. Such additional visual information provided to a user may support the user in controlling (guiding, moving, manipulating) the needle 2. The additionally displayed information 32 may be also augmented by depth cue information, for example by means of a semi-transparent plane as described above. Here, the spatial cue information would indicate spatial position and/or relation of the target site 32 within the intra-corporal manipulation environment 20.

Further, information on manipulation task(s) to be performed at the target site 32 (in the example assumed here: suturing) may be visualized on-top of the display information 32' of the target site 32. In Fig. 5, this is illustrated by a line 34 along which the suturing is intended. Having such information displayed, the needle 2 can be accordingly manipulated with reference to line 34. Such further information may be obtained on pre-operative planning.

Moreover, it is contemplated to display, on the display unit 28, information indicating an area in which manipulation is allowed or to which manipulation is restricted. In Fig. 6 this is illustrated by a rectangle 36. Rectangle 36 represents an example of limits, boundaries or borders within which needle 2 should be manipulated and which should not be surpassed or touched with the needle 2. In the case the needle 2 is positioned within the intra-corporal manipulation environment 20 such that boundaries 36 are exceeded, a warning 38 may be displayed.

Further, the present invention may be used in combination with a tracking system. A tracking system, as used herein, indicates a system for on-line registration of positions and/or movements of an object in space. Commonly, such systems employ markers attached on to be tracked objects, which markers are visually observed by cameras such that their positions and/or movements with respect to a coordinate system defined by the camera arrangement may be determined. To this end, there must be direct lines of sight between a marker and a number of cameras, which number being sufficient to determine the marker's position (usually at least three cameras). This also applies to any other tracking system using markers that may be identified in non-visual manner (e.g. magnetic markers).

A tracking system may be used to track, in the above-assumed example, positions in six degrees of freedom of the forceps 10 and/or the endoscopic camera device 16. This may be achieved by attaching markers to the extra-corporal parts of the forceps 10 and/or the endoscopic camera device 16 in such a way that tracking the markers provides information on transitional and/or rotational positions of the forceps 10 and/or the endoscopic camera device 16 with respect to the tracking system's coordinate system. Such position information may be used to determine more precisely the position of the needle 2 and/or to improve generation of spatial cue information.

In the examples discussed above with reference to Figs. 1 to 6, position of the needle 2 may be determined with reference to a coordinate system defined by the endoscopic camera device 16 and, particularly, its field of view. Using a tracking system, movements of the camera's coordinate system may be also determined and taken into account in determining position(s) of the needle 2. Also, the needle's position may be determined with respect to the tracking system's coordinate system and/or with respect to a coordinate system associated to one of the forceps 10. In a similar way, a coordinate system used as basis for spatial cue information may be the endoscopic camera device's coordinate system, the tracking system's coordinate system or a forceps' coordinate system.

To use image data provided by an image acquisition unit to obtain spatial information on the spatial environment and/or object of interest, it may be advantageous to calibrate the image acquisition unit. In the case of endoscopic camera device 16 and also in any comparable image acquisition arrangement in medical and technical applications this may be accomplished, e.g., as described in "Fully Automatic Endoscopic Calibration for Intraoperative Use" by Ch. Wengert et at al., Bildverarbeitung für die Medizin, Hamburg, March 2006.

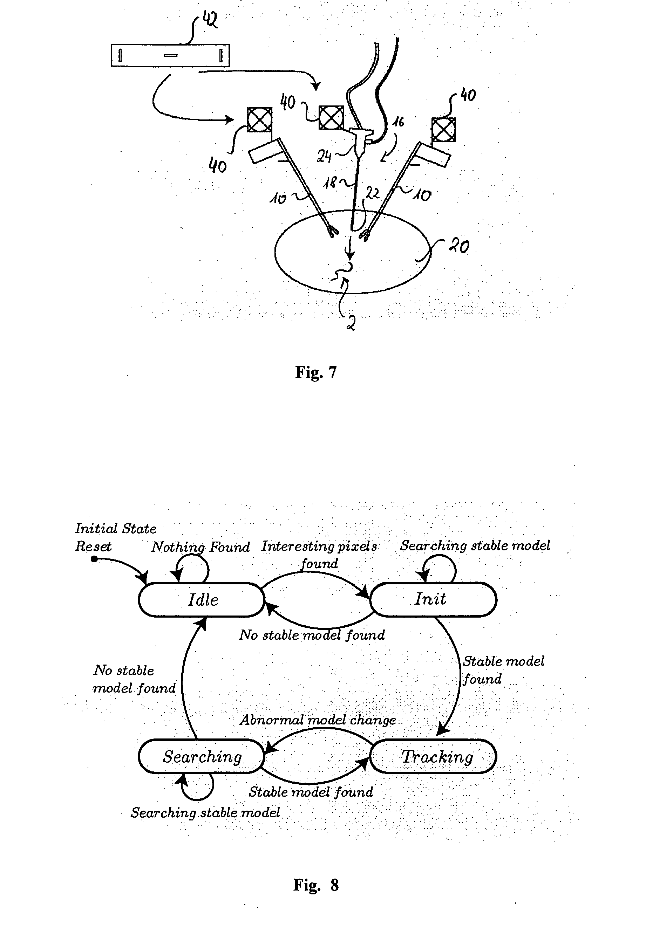

An exemplary embodiment including a tracking system as illustrated in Fig. 7. As shown in Fig. 7, markers 40 are attached to the forceps 10 and the endoscopic camera device 16 and tracked by tracking system 42.

Depending on an application of the present invention, determination of the position and/or movement of an object in spatial environment may be a challenging task. Especially in the case of surgical endoscopic interventions, neither the camera position nor the spatial environment itself is fixed in space. Particularly, from the camera's point of view, observed background (flash, tendons, tissue, organs, etc.) of the spatial environment may (constantly) move and/or change its appearance and shape. Further, movements of an object of interest are virtually not constrained, i.e. the object may be moved in all directions and may be rotated around all axes (movements in six degrees of freedom). A constraint may be, at least in some applications, that there is (some) continuity in movement. For example, two consecutive images obtained by a camera operated at a common sampling frequency (e.g. 30 Hz half rate) may be assumed to represent a (at least) virtually movement of an object between the position of a first image and the position of a second image. Moreover, it should be considered that an object of interest might be (partially) occluded from being observed by the camera.

Therefore, it may be helpful, in some applications, to provide an object of interest by one or more visual characteristics that may be differentiated from visual characteristics of the spatial environment. In the above assumed examples, such a visual characteristic of the to be observed object (needle 2) may be obtained by providing the needle 2 with, e.g., a color (e.g. green), shading, reflectivity etc. not or rarely being present in the spatial environment. In cases where an object of interest inherently exhibits visually observable properties delimitating the object from the current spatial environment, such supported measures may be refrained from.

In any case, environment image information may be then processed to extract information indicating such visual characteristic(s), e.g. by extracting information indicating a specific color. Having identified such object specific information, respective part(s) of the environment image information may be assumed to represent the object of interest and may be extracted as object image information from the environment image information for further use.

In the following, preferred embodiments of the present invention are discussed in further detail. To promote an understanding of the present invention, the above-assumed example of an object of interest "needle" in a spatial environment "intra-corporal manipulation" environment is continued.

In preferred embodiments, it is intended to use at least four, optionally five states, namely an idle state, an initialization state, a tracking state and a seeking state as well as - an option of preferred embodiments - a wait state. Four of these states are illustrated in Fig. 8; all five states will be explained in greater detail below: Having established a set-up arrangement for carrying out the above-assumed suturing process (including, inter alia, positioning of forceps 10 and endoscopic camera device 16 such that their distal ends are positioned in the intra-corporal manipulation environment 20 and connecting the endoscopic camera device 16 with computing unit 26 and display unit 28, introducing the needle 2 into the intra-corporal manipulation environment 20) an idle state is entered. In this state, the present invention monitors, by means of computing unit 26, image information from the endoscopic camera device 16 to identify image information indicating the needle 2 or parts thereof (preferably characteristic parts thereof). In this state, as compared with further below described operating states, larger image information portions may be used. For example, assuming that the image information from the endoscopic camera device 16 comprises pixels, the base initialization or wait state may use groups of 100 pixels (e.g. 10 x 10 pixel) to "scan" the image information for "interesting pixels", i.e., image information indicating the needle 2 or parts thereof.

To this end, the environment image information may be computed to identify information indicating visual characteristic(s) of the object of interest. In the assumed examples, this may be accomplished by extracting information indicating the specific color of the needle 2. Having identified such object specific information, respective part(s) of the environment image information may be assumed to represent the object of interest and may be extracted as object image information from the environment image information for further use.

It is noted that an object of interest may be partly occluded such that environment image information will contain only respective partly object image information. However, such cases may be handled as if complete object image information is available. For example, having identified visual characteristic(s) of the object of interest (i.e. image information that cannot originate from the (surrounding) spatial environment), presence of the object in the environment can be assumed. Then, respectively identified environment image information (i.e. partly object image information) may be used further as described below.

Nevertheless, in some cases identified object image information might be not sufficient. For example, the object image information might represent a (too) small part of the object and/or a not characteristic object part (e.g. in the assumed examples, only a needle end and not its curved portion). In such cases, the steps to obtain sufficient object information may be repeated (here, the idle state is further executed).

These observations correspondingly apply to the states described below, particularly in embodiments where - if insufficient object information (or insufficient data/information derived therefrom) is prevailing or existing for less then a given period of time and/or number of image information site (e.g. frames) - the current state is maintained.

In the case such an image information portion indicates the needle or part(s) thereof or at least assumed indicates that that information part may be assumed as a needle (part), an initialization state is entered. Otherwise, the idle state is maintained until requirements for transition to the initialization state are met.

In the initialization state, it is determined whether the image information on the intra-corporal manipulation environment 20 actually includes image information of the needle 2 or part(s) thereof. To this end, as compared with the above described idle status, smaller information portions may be used. For example, image information portions each including groups of 25 pixels (e.g. 5 x 5 pixel) may be used. However, it is also possible to carry out the initialization state by searching the image information on the intra-corporal manipulation environment 20 on pixel basis.

In some embodiments, in order to ascertain whether image information indicating the needle 2 or parts thereof is present, part(s) of the environment image information identified in that regard is compared with information indicating characteristics of the object being in interest (i.e. the needle 2). Characteristic information of an object of interest may include information on the shape(s) of at least one portion of the object, geometric properties, curvatures, angles, planes, stepped portions etc.

In the assumed case of needle 2, such information may indicate, as set forth above, the radius of the curved portion 4 of the needle 2. Then, object shape information in form of information indicating the radius of the curved portion 4 may be compared with interesting image portions (interesting pixels) of the environment image information to determine whether the environment image information and, particularly, whether image information indicating the needle or parts) thereof includes information representing a curved portion having that radius.

For comparing the object shape information and interesting parts of the environment image information (possibly indicating the object of interest, here needle 2, or part(s) thereof) it may be advantageous to consider that the object of interest may be positioned in the environment such that its object image information does not include information actually corresponding with the object shape information but a version thereof projected onto a plane. This is due to the fact that the object of interest is imaged by a two-dimensional image acquisition means, wherein the object of interest may be translated and/or rotated with respect to the coordinate system of the image acquisition means. Then, the mentioned comparing step may include determining whether the object shape information translated and/or rotated with respect to a corresponding coordinate system at least partially matches with the interesting part(s) of the environment image information. Such a match may be determined even in the case if only parts of the object image information (or its translated and/or rotated version) have a correspondence in the environment image information in order to take into account that the object of interest may be partially occluded (e.g. by forceps 10 in the case of needle 2).

Having determined a match, the object of interest is identified in the environment object information and respective object image information may be extracted therefrom for use as described further below.

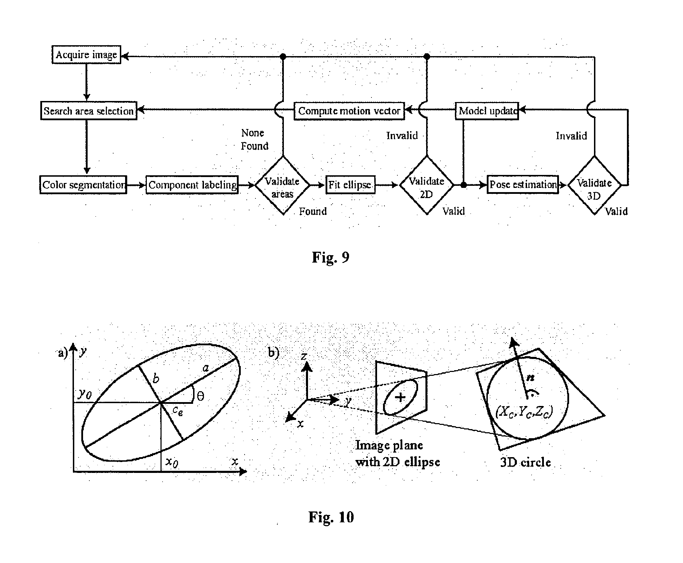

In some further embodiments, the initialization state may include a more complex process for recognition of an object of interest. This recognition process includes determining whether object shape information may be fitted to image information indicating an object of interest (or part(s) thereof) to ascertain whether the object of interest is present in the environment image information and generating a model of fitting of the object shape information to the object image information as well as validating the model. Further details in these regards are given below with reference to Figs. 9 and 10.

Having completed the initialization state, i.e. having identified from the environment image information valid object image information, a tracking state is entered. In the tracking state, the environment image information is processed to "track" the object image information in relation to the remaining image information. The term "tracking" is used to illustrate that moving/rotating the object in the environment will result in corresponding changes in the relation, on the one hand, of image information representing the object (or part(s) thereof) and, on the other hand, image information representing the surrounding environment. Therefore, it might be said that the object image information "moves" in the environment image information, a movement that may be tracked.

As apparent for these skilled in the art, tracking in the tracking state differs from tracking as set forth above with reference to Fig. 7 and further cases of conventional object tracking in space. The tracking state may provide tracking results in two-dimensions (e.g. in the image information phase), however, as set forth below, tracking results in space including up to 6 degrees of freedom may be also obtained. The tracking state takes into account that the object of interest (e.g. needle 2) may be moved (translational and/or rotational movements) and, thus, its object image information will be changed accordingly. For tracking the object image information, a search area within the environment image information may be defined. To consider movements of the object of interest, the search area may be moved accordingly. To this end, previously determined object image information and, particularly, their relation to the remaining image information may be used to calculate or estimate a translational movement of the object of interest. Then, assuming that there will be at least some continuity in object movement, the search area may be moved accordingly.

As long as object image information may be tracked and/or as long as image information variations (particularly with respect to object image information) may be considered consistent with a movement of the object of interest and/or as long as processing performance may be maintained at a desired/required level, the tracking state is maintained. However, for example, in the case adjustment of the search area with respect to movements of the object of interest and, respectively, variations of its object image information in relation to remaining image information may be considered inconsistent, a seeking state described below may be entered. Such an inconsistency may be present, for example, if a search area adjustment exceeds a given threshold (e.g. difference between a search area and a subsequent search area is above a predefined limit).

Further, in the case the amount of to be processed image information is considered to be too large for a proper data processing (e.g. too many pixels have to be processed resulting in a drop of performance), a wait state may be entered. The wait state, which is not shown in Fig. 8, may, for example, used in cases where computational performance is not sufficient.

The seeking state is comparable with the initialization state in general. Therefore, the above observations also apply here. However, the seeking state is entered from the tracking state and left if completed successfully. In the case the seeking state fails, the above described idle state is entered (again).

In the wait state, if being employed, the search area is maintained until desired performance is regained. Then, the tracking state is re-entered.

As described above, a more complex process of recognition of an object of interest may be employed. Such a recognition process may include, as illustrated in Fig. 9, selecting a search area, segmentation of environment image information (e.g. color segmentation), labeling of image information parts as object image information ("component labeling" or "connected component labeling") , validating of image information portions ("validate areas"), fitting of object image information to object image information ("fit ellipse"), validating the fitting step on the basis of two-dimensional image information ("validate 2D") also referred to as model validation, and computing of information indicating movements (translational and/or rotational) of an object of interest. The recognition process may further include updating information on a fitting relation between the object shape information and the object image information ("model update").

At the beginning, on the basis of acquired environment image information including object image information, an initial search area may be defined, e.g., to correspond with a central image portion in order to limit the amount of data to be processed. However, all environment image information (including object image information) may be initially searched. Further, the larger image information portions (e.g. groups of more pixel(s) as compared with following steps may be employed within a search area. The initial search area is then used to determine which of the environment image information represents (or at least may be considered to represent) object image information. To this end, it is, as set forth above, contemplated to identify object image information on the basis of object-specific visual characteristics, such as a specific color.

In preferred embodiments, the search area is color segmented in the HSI color space. This allows to filter a large range of color shades with different illumination sufficiently precise to extract object image information on the basis of its color information. For example, an RGB image of the environment and the object of interest therein may be converted to the HSI color space and all pixels within a hue-range, from, for example 65° ≤ H ≤ 160° (as camera specific example), may be determined to belong to object image information. In order to reduce specularities and to remove dark image areas, for example, it is possible to define a minimal saturation (e.g. minimal saturation S of 0.15 as camera specific example) and/or a minimal intensity level (e.g. minimal intensity level I of 0,06 as camera specific example) and to determine only those pixels as belonging to object image information also meeting at least one of these constrains.

The thus identified (segmented) portions of the environment image information (e.g. pixels) are associated with each other by labeling. To this end, a connected component labeling algorithm may be used to associated pixels even if not being neighboring pixels. Further, it is possible to discard neighboring pixels if their number is below a given threshold (e.g. 50 pixels).

In the case the overall image area represented by such identified and labeled pixels is smaller than a given threshold, the process returns to further image acquisition to carry out the steps described so far again. In the case, the validation of the image area of identified and labeled pixels is determined to be suitable for further processing, the process proceeds to fit object shape information to identified object image information.

In the case of the above assumed example of an object of interest in form of a needle having a curved portion with a known radius, this may be accomplished as follows. The curved portion 4 of the needle 2 is an arc segment. Therefore, a two-dimensional image thereof represents a projection of the arc segment to an image plane resulting in an ellipse segment.

An exception may occur if the needle 2 is positioned such that a plane including the curved portion 4 is perpendicular to the image plane (parallel to the view of direction). Such exceptional cases can be identified if the fitting procedure described in the following fails and/or by processing labeled pixels to determine whether they represent a straight line.

In other cases, an ellipse is fitted to the labeled pixels, for example, as disclosed in "Direct least square fitting of ellipses", A. W. Fitzgibbon, M. Pilu and R. B. Fisher, IEEE Transactions on Pattern Analysis and Machine Intelligence", vol. 21, no. 5, p. 476-480, May 1999. Nevertheless, further different fitting approaches may be used.

As illustrated in Fig. 10a), this results in an ellipse center cₑ = [x₀, y₀]^{T}, major and minor ellipse axes a and b and an ellipse's tilt angle θ being the angle between the major axis a and the x-axis. The resulting parameter set pₜ = [x₀, y₀, a, b, θ]^{T} may be referred to as model.

A coordinate system for the model may be defined by a two-dimensional coordinate system associated to image acquisition means used for acquiring environment image information. However, different coordinate systems, e.g. with a reference to a tracking arrangement described in connection with Fig. 7, may be used.

In the case this modeling procedure is performed once, its result may be used to determine a current position of the object of interest in the spatial environment. However, as set forth above, it is intended to validate whether the currently obtained model is valid. To this end, the modeling step (and, if applicable, underlying/associated steps) is repeated and the respective outcomes are compared. Particularly, a current parameter set pₜ is compared with a previously obtained parameter set pₜ₋₁. This comparison may include to determine whether the current ellipse center differs from the previously computed ellipse center, if any, such that a predefined threshold is not exceeded. For example, such a threshold may be defined to indicate a predicted, allowed movement of the object of interest in the environment and a corresponding maximum allowed shift between subsequent ellipse centers, respectively.

Further, model validation may include comparing at least one of the parameters a, b and θ, wherein respective differences below a given threshold (e.g. 30%) indicate a valid model. In the case the current model is considered valid, the current model is used for determination of the object's spatial position in the environment and may be use for comparison with a subsequent model for model validation.

On the basis of the above described object recognition process, the object's position (e.g. pose, translational and/or rotational position and/or movement) in the environment is determined. This procedure is also referred to as pose estimation (see Fig. 9). Using the current two-dimensional ellipse parameters, a corresponding circle in a three-dimensional space is determined. Such a circle may be also referred to as "3D circle". To this end, the two-dimensional ellipse parameters may be computed using the method disclosed in "Trip: a low-cost vision based location system for ubiquitous computing", D. L. De Ipiña, P. R. S. Mendonca and A. Hopper, Personal Ubiquitous Comput., vol. 6, no. 3, pp. 206-219, 2002. Nevertheless, further different computing approaches may be used.

As illustrated in Fig. 10b), this results in a circle in a three-dimensional space, which circle has a center C = [X_{C}, Y_{C}, Z_{C}]^{T} and a normal vector n of the circle's plane.

In case of other objects, the spatial representation may be also be done by using either Eulerangles, angle-axis or quaternions for the orientation and a translation vector or the use of dualquatemions for both or parametric representation of geometric entities (e.g. x²+y²+z²=r² for a sphere).

The three-dimensional space including the circle may be defined by a three-dimensional coordinate system with respect to the field of view of an image acquisition means used to obtain environment image information and/or, as set forth with reference to Fig. 7, a different three-dimensional coordinate system.

The circle's plane includes the curved portion 4 of the needle 2 and, particularly, the 3D circle has a circle portion corresponding with the curved portion 4.

Having determined the parameters of the 3D circle, the position of the needle may be determined. However, this may be ambiguous and result in two distinct solutions for the 3D circle's center and its normal vector. In order to evaluate which of the solutions is correct or more suitable, it is possible to determine for each solution an ellipse center c in the image plane. Then, the solution resulting in a smaller difference to the initially determined ellipse center (see Fig. 10a)) may be chosen for determination of the needle's position in the environment in three-dimensions. In order to (also) use the correct or most proper circle plane, it is intended to compare the normal vectors of the two distinct solutions with a previously used normal plane vector and to select the normal vector having a smaller angular difference therewith. In the case the needle 2 is positioned such that its object image information indicates a straight line, as set forth above, it is possible to use the previously obtained plane vector. This might be helpful to obtain a movement consistent with prior motion. In addition or as alternative, such information may be obtained on the basis of three-dimensional reconstruction techniques using at least one (one, two, three, ...) object image information.

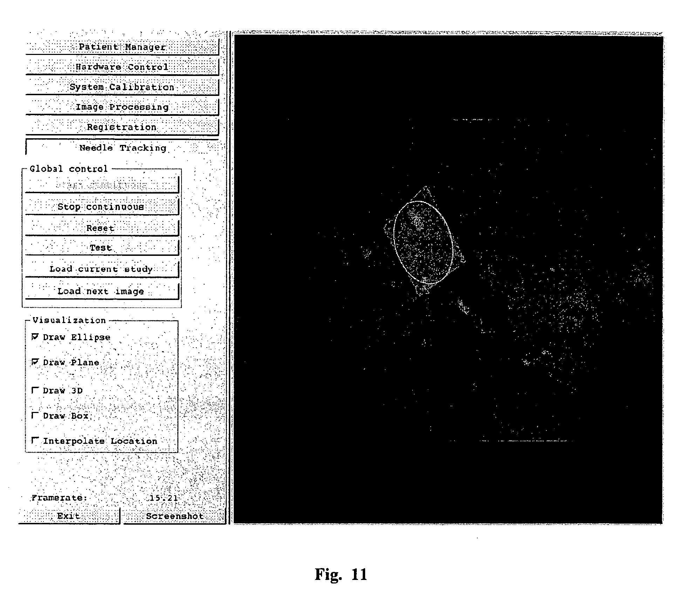

Having determined the current position of the object of interest, artificial spatial and/or orientation cues may be generated in order to compensate loss of three-dimensional visual information and depth perception. For the above assumed embodiments wherein the object of interest is a needle, the plane of the three-dimensional circle may be used to generate two-dimensional image information representing a projection of the three-dimensional circle's plane to the image plane. Such image information may be used to overlay a semi-transparent plane to the image information of the environment and the object of interest being displayed on the display unit (see Fig. 11).

Since the radius of the curved portion 4 is known, the radius of the three-dimensional circle is also known. Knowing the circle's radius and its position in a three-dimensional space with respect to the coordinate system of the image acquisition means (e.g. endoscopic camera device 16), allows determining of at least approximating a distance between the image acquisition means and the needle. Such information may be (additionally) used for generating augmented visualization by, for example, including a virtual scale in the image displayed on the display unit and/or displaying the current distance value in numbers.

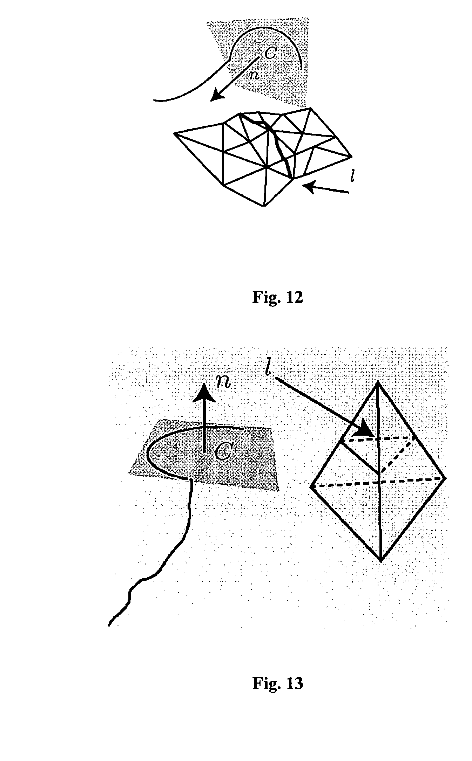

If additional data is present and registered to the tracker coordinate system such as CT, MR or intra-operatively reconstructed three-dimensional models, the virtual interaction between the object and this data can be visualized (see Figs. 12 and 13). In the case of the needle, the virtual cutting line between the registered three-dimensional data and the plane containing the needle is visualized in addition to the plane described in the previous section.

The plane π_{world} containing the needle expressed in the world coordinate system is being cut with the three-dimensional faceset model from the additional data M_{world} expressed in the same coordinate system resulting in a lineset s := π_{world} ∩ M_{world}.

In order to avoid multiple cutting lines, depending on the three-dimensional model's topography, a visibility constraint is placed on the lineset s returning only those lines that are visible from the center of the needle. So only the cutting line that is closest to the needle remains, see Fig. 13). The lineset of the remaining cutting line can then be written as *f*/s := v_{c} (ls, M_{world}), with v_{c} a visibility filter.

The visibility filter vₑ(ls, M) is defined as function that takes a lineset s and a three-dimensional model M and returns that part of the lineset that is visible from the point e, i.e. lies in front of *M*. The point e is called the eye point of the filter.

A second visibility constraint returns those lines from the set that actually are visible in the current view: vls = v_{camera}(fls, M_{world}). This lineset then is reprojected into the current two-dimensional image for providing the navigation aid.

The visibility filter vₑ casts rays from the point e to both endpoints of each line. If a face is encountered between the camera position and one of the line vertices, this line is invisible.

Algorithm Outline:
- Compute the cutting lineset /s := π_{world} ∩ M_{world} in three-dimensional
- Apply the visibility constraints:
   -- Discard lines on the backside of the model fls := v_{C} (ls, π_{world} ∩ M_{world})
   -- Remove non-visible lines from camera vls := v_{camera}(fls, M_{world})
- Reprojection of the lineset to the two-dimensional view

The three-dimensional cutting is implemented in a brute force manner. It might be possible to improve the three-dimensional cutting by storing the three-dimensional model in a spatial data structure. Every facet of the model M_{world} is cut with the needle plane. The plane is given as vector [a, b, c, d], so that ax + by + cz + d = 0 holds for every point in the plane.

## Claims

1. A method of determining spatial cue information for an object in a spatial environment on the basis of two-dimensional image information of the object for augmented two-dimensional visualization of the object, including the steps of
- providing two-dimensional environment image information indicating a two-dimensional representation of the spatial environment, the two-dimensional environment image information including two-dimensional object image information indicating a two-dimensional representation of the object;
- extracting the two-dimensional object image information from the two-dimensional environment image information;
- comparing the extracted two-dimensional object image information and object shape information indicating a shape of the object;
- determining, on the basis of a result of the comparison step, object position information indicating a spatial positioning of the object in the spatial environment; and
- determining spatial cue information on the basis of object position information.

2. The method of claim 1, wherein the step of providing two-dimensional environment image information includes a step of providing at least one two-dimensional environment image information; and wherein at least one of the extracting step, the comparing step, the object position information determining step and the spatial cue information determining step is performed for each of the at least one two-dimensional environment image information.

3. The method of one of the preceding claims, wherein the comparing step includes a step of fitting the object shape information to the extracted two-dimensional object image information.

4. The method of one of the preceding claims, wherein the step of determining spatial cue information includes a step of determining a two-dimensional or three-dimensional geometry comprising at least a part of the object having at least a part of said shape.

5. The method of one of the preceding claims, further including
- a step of providing previously registered image information of the environment without the object, the previously registered image information including visual information indicating at least one target position to which the object is to be at least one of being moved to, at which the object is to be positioned, and at which a manipulation by means of the object is intended;
- a step of mapping the at least two-dimensional environment image information and the previously registered image information to determine, for each of the at least one target position, a corresponding position within the at least two-dimensional environment image information; and
- a step of amending the at least one two-dimensional environment image information and/or further two-dimensional environment image information by position indicating information at the at least one determined corresponding position.

6. A computer program product including program code for, when being executed on a computer system, carrying out the method according to one of the preceding claims.

7. Visualization enhancement device for augmented two-dimensional visualization of an object in a spatial environment by means of spatial cue information, comprising:
- a unit being adapted to provide two-dimensional environment image information indicating a two-dimensional representation of the spatial environment, the two-dimensional environment image information including two-dimensional object image information indicating a two-dimensional representation of the object;
- a unit being adapted to extract the two-dimensional object image information from the two-dimensional environment image information;
- a unit being adapted to compare the extracted two-dimensional object image information and object shape information indicating a shape of the object;
- a unit being adapted to determine, on the basis of a result of the comparison step, object position information indicating a spatial positioning of the object in the spatial environment; and
- a unit being adapted to determine spatial cue information on the basis of object position information.

8. The device of claim 7, wherein the comparing unit is adapted to fit the object shape information to the extracted two-dimensional object image information.

9. The device of claim 7 or 8, wherein the unit for determining object position information is adapted to determine a position of the object in the spatial environment.

10. The device of one of the claims 7 to 9, wherein the unit for determining spatial cue information is adapted to determine a two-dimensional or three-dimensional geometry comprising at least a part of the object having at least a part of said shape.

11. The device of one of the claims 7 to 10, further including a unit being adapted to display the two-dimensional environment image information amended by the spatial cue information.

12. The device of one of the claims 7 to 11, further including
- a unit being adapted to provide previously registered image information of the environment without the object, the previously registered image information including visual information indicating at least one target position to which the object is to be moved and/or at which the object is to be positioned; and
- a mapping unit being adapted to map the at least two-dimensional environment image information and the previously registered image information to determine, for each of the at least one target position, a corresponding position within the at least two-dimensional environment image information, wherein the amending unit is adapted to amend the at least one two-dimensional environment image information and/or further two-dimensional environment image information by position indicating information at the at least one determined corresponding position.

13. A system, comprising
- the device according to one of the claims 7 to 12; and
- the object.

14. The system of claim 13, further including a three-dimensional tracking device being adapted to provide a spatial coordinate system for the object.
